# EUROPEAN PATENT SPECIFICATION

(11) **EP 2 403 309 B1**
(45) Date of publication and mention of the grant of the patent: **18.04.2018**
(21) Application number: 10788921.4
(22) Date of filing: 12.06.2010
(51) Int. Cl.: H04W 72/12

(54) **METHOD AND DEVICE FOR SCHEDULING USER DATA**
VERFAHREN UND VORRICHTUNG ZUR TERMINPLANUNG VON BENUTZERDATEN
PROCÉDÉ ET DISPOSITIF DE PROGRAMMATION DE DONNÉES D UTILISATEUR

(30) Priority: 29.06.2009 CN 200910142278
(43) Date of publication of application: 04.01.2012
(73) Proprietor: ZTE Corporation, Shenzhen, Guangdong 518057 (CN)
(72) Inventor: LI, Ruifeng, Shenzhen Guangdong 518057 (CN)
(74) Representative: HGF Limited
(86) International application number: PCT/CN2010/073903
(87) International publication number: WO 2010/145525

(56) References cited:
- EP-A2- 1 936 887
- CN-A- 101 094 030
- CN-A- 101 207 553
- CN-A- 101 594 689
- US-A1- 2003 203 736
- US-A1- 2006 256 785
- "Universal Mobile Telecommunications System (UMTS); Physical layer procedures (FDD) (3GPP TS 25.214 version 8.6.0 Release 8)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.6.0, 1 June 2009 (2009-06-01), XP014044598,

## Description

### TECHNICAL FIELD

The present invention relates to the field of communications, particularly to a method and a device for scheduling user data.

### BACKGROUND

In the field of Wideband Code Division Multiple Access (WCDMA) or Time Division-Synchronous Code Division Multiple Access (TD-SCDMA), the code channel overhead of a High Speed Shared Control Channel (HS-SCCH) is small for the transmission of a big data packet in a High Speed Downlink Packet Access (HSDPA) service or a subsequent High Speed Packet Access plus (HSPA+) service, but the transmission overhead is particularly large for the transmission of a small data packet in such services as Voice over IP (VoIP). However, the HS-SCCH-Less service is a new service in the HSPA+ service and can increase the data capacity of the VoIP service without sending an HS-SCCH code channel, but user data in the HS-SCCH-Less service cannot be scheduled according to the scheduling method in the HSDPA or HSPA+ service because no HS-SCCH code channel is sent. Therefore, how to schedule the HS-SCCH-Less user data is the problem to be solved.

EP 1936887 A2 provides a method for a user equipment in a wireless communications system for improving functions of continuous packet connectivity.

US 2003/0203736 A1 provides a method for supporting the traffics with different quality of service by a high speed downlink packet access system (HSDPA).

### SUMMARY

The technical problem to be solved by the present invention is to provide a method and a device for scheduling user data, in order to schedule HS-SCCH-Less user data.

To solve the above-mentioned problem, the present invention provides a method and a device for scheduling user data, and the specific technical solution is as follows.

A method for scheduling user data comprises:
during the scheduling of user data, judging, by a base station, that a first queue of users arranged according to priorities of the users comprises an High Speed Shared Control Channel, HS-SCCH, -Less user, and then allocating, by the base station, High Speed Downlink Shared Channel, HS-DSCH, code channels to the HS-SCCH-Less user;
obtaining, by the base station, scheduling parameters according to a number of the allocated HS-DSCH code channels, a Channel Quality Indicator, CQI, reported by the HS-SCCH-Less user and a capability level of the HS-SCCH-Less user; wherein the capability level of the HS-SCCH-Less user comprises HS-SCCH-Less user category; and
scheduling, by the base station, HS-SCCH-Less user data according to the scheduling parameters.

The step of obtaining, by the base station, scheduling parameters according to the number of the allocated HS-DSCH code channels, a CQI reported by the HS-SCCH-Less user and the capability level of the HS-SCCH-Less user may comprise:
obtaining, by the base station, a capability level table of the HS-SCCH-Less user according to the capability level of the HS-SCCH-Less user;
determining, by the base station, a Transmission Block size (TBsize) from the capability level table according to the number of the allocated HS-DSCH code channels and the CQI reported by the HS-SCCH-Less user, and recording, by the base station, a CQI corresponding to the determined TBsize, the number of the code channels and a modulation mode;
determining, by the base station, power of the allocated HS-DSCH code channels according to the CQI corresponding to the determined TBsize and the CQI reported by the HS-SCCH-Less user; and
using, by the base station, the determined power of the allocated HS-DSCH code channels, the number of the code channels and the modulation mode as the scheduling parameters.

The step of determining, by the base station, the power of the allocated HS-DSCH code channels according to the CQI corresponding to the determined TBsize and the CQI reported by the HS-SCCH-Less user may comprise: using, by the base station, the sum of the difference obtained by the CQI corresponding to the determined TBsize minus the CQI reported by the HS-SCCH-Less user, a pilot frequency and a Measure Power Offset (MPO) as the power of the allocated HS-DSCH code channels.

The method may further comprise: when user data are retransmitted, judging, by the base station, that a second queue of users arranged according to priorities of the users comprises an HS-SCCH-Less user, and retransmitting, by the base station, the HS-SCCH-Less user data.

After allocating, by the base station, the HS-DSCH code channels to the HS-SCCH-Less user, the method may further comprise: judging, by the base station, whether the allocated HS-DSCH code channels are available; if yes, then obtaining the scheduling parameters; otherwise, quitting this scheduling.

The number of the HS-DSCH code channels may be one or two.

A device for scheduling user data, for use in a base station, comprises: a judging module, an allocating module, an obtaining module and a scheduling module; wherein
the judging module may be used for, during scheduling of the user data, judging whether a first queue of users arranged according to priorities of the users comprises an High Speed Shared Control Channel, HS-SCCH, -Less user;
the allocating module may be used for allocating High Speed Downlink Shared Channel, HS-DSCH, code channels to the HS-SCCH-Less user when the judging module judges that the first queue of users arranged according to priorities of the users comprises the HS-SCCH-Less user;
the obtaining module may be used for obtaining scheduling parameters according to a number of the allocated HS-DSCH code channels, a Channel Quality Indicator (CQI) reported by the HS-SCCH-Less user and a capability level of the HS-SCCH-Less user; wherein the capability level of the HS-SCCH-Less user comprises HS-SCCH-Less user category; and
the scheduling module may be used for scheduling HS-SCCH-Less user data according to the scheduling parameters obtained by the obtaining module.

The obtaining module may comprise: a first obtaining unit, a first determining unit, a second determining unit and a second obtaining unit; wherein
the first obtaining unit may be used for obtaining a capability level table of the HS-SCCH-Less user according to the capability level of the HS-SCCH-Less user;
the first determining unit may be used for determining a Transmission Block size (TBsize) from the capability level table according to the number of the allocated HS-DSCH code channels and the CQI reported by the HS-SCCH-Less user, and recording a CQI corresponding to the determined TBsize, the number of the code channels and a modulation mode;
the second determining unit may be used for determining power of the allocated HS-DSCH code channels according to the CQI corresponding to the determined TBsize and the CQI reported by the HS-SCCH-Less user; and
the second obtaining unit may be used for using the determined power of the allocated HS-DSCH code channels, the number of the code channels and the modulation mode as the scheduling parameters.

The step that the second determining unit determines the power of the allocated HS-DSCH code channels according to the CQI corresponding to the determined TBsize and the CQI reported by the HS-SCCH-Less user may comprise: the second determining unit uses the sum of the difference obtained by the CQI corresponding to the determined TBsize minus the CQI reported by the HS-SCCH-Less user, a pilot frequency and a Measure Power Offset (MPO) as the power of the allocated HS-DSCH code channels.

The judging module may be further used for, when user data is retransmitted, judging whether a second queue of users arranged according to priorities of the users comprises an HS-SCCH-Less user; and
the scheduling module may be further used for retransmitting HS-SCCH-Less user data when the judging module judges that the second queue of users arranged according to priorities of the users comprises the HS-SCCH-Less user.

The judging module may be further used for judging whether the HS-DSCH code channels allocated to the HS-SCCH-Less user by the allocating module are available; if yes, then obtaining the scheduling parameters; otherwise, quitting this scheduling.

The number of the HS-DSCH code channels allocated to the HS-SCCH-Less user by the allocating module may be one or two.

A method and a device for scheduling user data of the present invention can realize to schedule HS-SCCH-Less user data and meet the requirements on the development of an HS-SCCH-Less service by allocating HS-DSCH code channels to an HS-SCCH-Less user during scheduling user data, obtaining scheduling parameters according to the number of allocated HS-DSCH code channels, a CQI reported by the HS-SCCH-Less user and a capability level of the HS-SCCH-Less user, and scheduling HS-SCCH-Less user data according to the scheduling parameters.

### BRIEF DESCRIPTION OF THE DRAWINGS

Fig. 1 is a flowchart illustrating a method for scheduling user data provided by one embodiment of the present invention; and
Fig. 2 is a structural block diagram illustrating a device for scheduling user data provided by one embodiment of the present invention.

### DETAILED DESCRIPTION

The core concept of the present invention is to realize to schedule HS-SCCH-Less user data and meet the requirements on the development of an HS-SCCH-Less service by allocating High Speed Downlink Shared Channel (HS-DSCH) code channels to an HS-SCCH-Less user during scheduling user data, obtaining scheduling parameters according to the number of allocated HS-DSCH code channels, a Channel Quality Indicator (CQI) reported by the HS-SCCH-Less user and a capability level of the HS-SCCH-Less user, and scheduling HS-SCCH-Less user data according to the scheduling parameters.

The technical solution of the present invention will be described in detail in combination with the drawings and preferred embodiments.

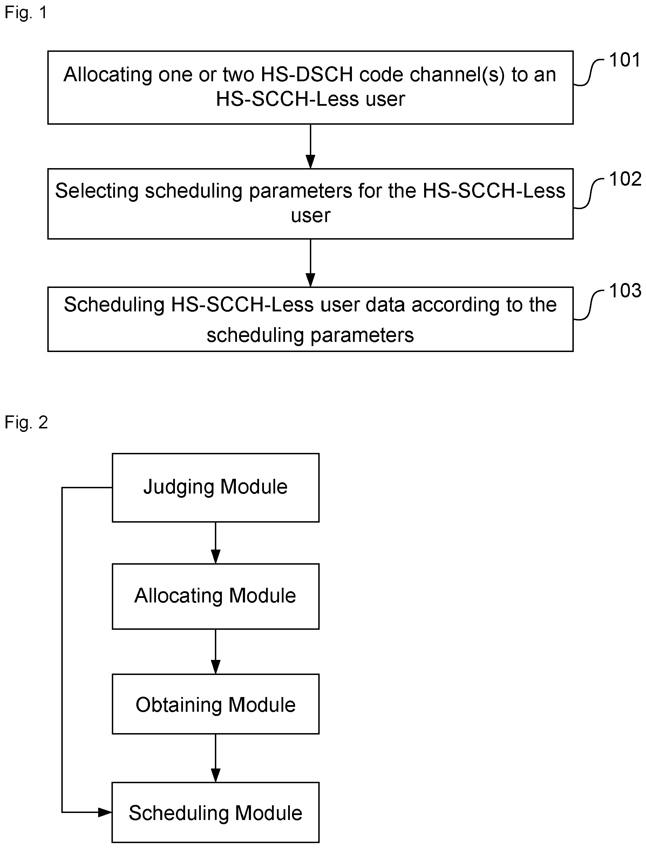

The first embodiment of the present invention provides a method for scheduling user data, and Fig. 1 is a flowchart illustrating a method for scheduling user data provided by this embodiment of the present invention, in which the method comprises the following steps.

Step 101: During scheduling user data, a base station (NodeB) judges whether a first priority queue comprises an HS-SCCH-Less user, if yes, preallocating HS-DSCH code channels to the HS-SCCH-Less user.

Specifically, after receiving a radio link establishment message or a radio link reconfiguration message from the HS-SCCH-Less user, the NodeB allocates one or two HS-DSCH code channel(s) to the HS-SCCH-Less user. Preferably, to prevent that the HS-DSCH code channels are in failure and no code channel is available for scheduling, the NodeB allocates two HS-DSCH code channels to the HS-SCCH-Less user, wherein one is as a main code channel with a code channel number x and the other is as a standby code channel with a code channel number y. When the main code channel is failed, the user data is transmitted through the standby code channel; or when the user data amount is large, the standby code channel can share the user data amount with the main code channel, wherein the values of x and y can be flexibly set according to the actual applications. For example, in this embodiment, x can be set to 1 and y can be set to 0.

Specifically, the HS-SCCH-Less user and non-HS-SCCH-Less user can be identified by identification bits, and an optional priority queue can be, but not limited to, in the format of Table 1.

**Table 1**

| Identification bit | User |
|---|---|
| m | user 1 |
| m | user 2 |
| m | user 3 |
| m | user 4 |
| n | user 5 |
| ... ... ... | ... ... ... |

In Table 1, identifier m represents that its corresponding user is an HS-SCCH-Less user, and identifier n represents that its corresponding user is a non-HS-SCCH-Less user. Wherein, during scheduling user data, the NodeB will schedule the HS-SCCH-Less user data at first, and then schedule the non-HS-SCCH-Less user data. The values of m and n can be flexibly adjusted according to the circumstances. For example, in this embodiment, m can be set to 11 and n can be set to 22.

Specifically, during scheduling user data, the NodeB judges the type of users according to the identification bits, i.e., when reading the identifier m, it judges that the user corresponding to the identifier is an HS-SCCH-Less user; and when reading the identifier n, it judges that the user corresponding to the identifier is a non-HS-SCCH-Less user. Because the NodeB judges that an HS-SCCH-Less user is available in Table 1, at this time, it will schedule HS-SCCH-Less user data in the sequence from high priority to low priority according to the priorities of the HS-SCCH-Less users, and then schedule non-HS-SCCH-Less user data after scheduling the HS-SCCH-Less user data.

It should be mentioned that, the priority of the user is not static, and the NodeB will adjust it according to the actual circumstances.

Step 102: The NodeB selects scheduling parameters for the HS-SCCH-Less user according to the number of the allocated code channels, a CQI reported by the HS-SCCH-Less user and a capability level of the HS-SCCH-Less user.

Wherein, the NodeB judges whether an HS-DSCH code channel is available in a cell at this time according to the HS-DSCH code channel number preallocated to the HS-SCCH-Less user; it determines that the number of the available code channels is zero and ends this scheduling if the main code channel or the main and standby code channels of two HS-DSCH code channels are simultaneously allocated with two or more HS-SCCH-Less users; otherwise, it determines that the number of the available code channels is not zero, obtains a Transmission Block size (TBsize) according to the capability level of the HS-SCCH-Less user, a CQI reported by the user and the number of HS-DSCH code channels, and records a CQI corresponding to the determined TBsize, the number of the code channels and the modulation mode. Wherein, the step of judging whether the HS-DSCH code channels are available is not necessary for the embodiment of the present invention.

Specifically, the NodeB prestores corresponding relationship information of the capability level of the user and a user capability level table, wherein the capability level of the user and the user capability level table correspond one to one, and the user capability level table is only for the convenient description of the embodiment, so the protection scope of the present invention is not limited to such name. The NodeB can find the corresponding user capability level table of the user in the protocol 25214 of the 3^{rd} Generation Partnership Project (3GPP) according to the obtained capability level of the user and the corresponding relationship information of the capability level of the user and the user capability level table, and the detailed format is shown in Table 2.

**Table 2**

| CQI | TBsize | Number of code channels | Modulation mode | ... ... ... |
|---|---|---|---|---|
| 1 | B1 | C1 | QPSK | ... ... ... |
| 2 | B2 | C2 | QPSK | ... ... ... |
| 3 | B3 | C3 | QPSK | ... ... ... |
| 4 | B4 | C4 | QPSK | ... ... ... |
| ... ... ... | ... ... ... | ... ... ... | ... ... ... | ... ... ... |
| 30 | B30 | C30 | QPSK | ... ... ... |

In Table 2, the value of the CQI gradually ascends from 1 to 30; accordingly, the value of TBsize ascends based on the same sequence of the CQI, wherein two or more TBsize values are probably equal; the number of the code channels changes as the value of TBsize, thereby needing no further description; and the modulation mode of the user is Quadrature Phase Shift Keying (QPSK), in Table 2, the NodeB can determine the row where the reported CQI is located according to the CQI reported by the user, the number of the code channels in the determined row, and the value of TBsize in the row according to the number of the code channels. For example, if the CQI reported by the user is 4, the row where the reported CQI is located can be determined according to the value of the CQI, that is, the number of the code channels in the row is C4, and if the value of C4 is 2, then the value of corresponding TBsize in the row can be found to be B4 according to C4. In some cases, when the number of the code channels determined according to the CQI reported by the user is greater than 2, the number of code channels is taken in turn in the descending order of the CQI in Table 2 according to the change of the number of code channels until the number of code channels is 2. The corresponding TBsize which can be one or more can be found according to the determined number of code channels, if more TBsizes are found, it is required to finally select one from them.

The NodeB compares the selected TBsize with the amount of user data to be transmitted; if the value of TBsize is less than or equal to the amount of user data to be transmitted and there is one TBsize, then it determines the TBsize as the final TBsize, and if there are many TBsizes, one is selected from them and the number of HS-DSCH code channels and CQI corresponding to the final TBsize are recorded; if the TBsize is greater than the amount of user data to be transmitted, TBsizes in turn in the descending order of the CQI are selected and the selected TBsize is compared with the amount of user data to be transmitted; and if the TBsize is less than or equal to the amount of user data to be transmitted, and is not the last TBsize, but the only TBsize, the TBsize is determined as the final TBsize, and the number of HS-DSCH code channels and CQI corresponding to the TBsize are recorded. If there are many TBsizes, it is necessary to select one of them as the final TBsize and the number of HS-DSCH code channels and CQI corresponding to the TBsize are recorded. If the TBsize is greater than the amount of user data to be transmitted and is the last one, the TBsize is determined as the final TBsize and the number of HS-DSCH code channels and CQI corresponding to the TBsize are recorded.

The NodeB uses power of HS-DSCH code channels used for scheduling the user data, the number of code channels corresponding to the final TBsize and the modulation mode QPSK as the scheduling parameters. Wherein, the power of HS-DSCH code channels used for scheduling the user data is the sum of a pilot frequency, the difference obtained by the CQI corresponding to the final TBsize minus the CQI reported by the UE, and a Measure Power Offset (MPO).

Step 103: The NodeB schedules the HS-SCCH-Less user data according to the scheduling parameters.

Wherein, during scheduling the user data, the NodeB updates available code channel resources of HS-DSCH code channels in a cell and the power resources of an HSDPA or HSPA+ service.

The above is aimed at the application scenario of newly transmitting the HS-SCCH-Less user data, and for the application scenario of retransmitting the HS-SCCH-Less user data, the NodeB will determine whether a second priority queue comprises an HS-SCCH-Less user, if yes, preferentially retransmitting the HS-SCCH-Less user data, and then retransmitting non-HS-SCCH-Less user data.

This embodiment will be described below according to a specific example for scheduling user data in detail. It is assumed that, the priority queue of a user is shown in Table 1, when determining that an HS-SCCH-Less user is available in Table 1, the NodeB allocates two HS-DSCH code channels to the HS-SCCH-Less user and then schedules HS-SCCH-Less user data in the sequence from high priority to low priority according to the priorities of the HS-SCCH-Less user. Because user 1 is an HS-SCCH-Less user with the highest priority, the data of user 1 are scheduled. The NodeB obtains a capability level table of user 1 according to the capability level of user 1, as shown in Table 2. At this moment, the value of the CQI reported by user 1 is 4, and the NodeB determines that the number of the code channels is C4 with the value of 5 according to the value of the CQI, C4 does not meet the transmission requirement because the number of the allocated code channels is 2. At this time, the NodeB selects the number of code channels in turn in the descending order of the CQI to obtain C3 with the value of 2, which meets the transmission requirement. According to C3, it can be obtained that the TBsize in the row is B3 with the value of 1400 bytes, which is greater than the amount of the data of user 1 to be transmitted 600 bytes. Meanwhile, the NodeB selects the TBsize values in turn in the descending order of the CQI to obtain B2 with the value of 600 bytes, and selects B2 or B1 as the final TBsize because, in the row where TBsize is located, the value of B1 is less than or equal to the amount of the data of user 1 to be transmitted; in the embodiment, B2 is determined as the final TBsize, and the number of code channels C2 and CQI corresponding to the TBsize are recorded, wherein the values of C2 and CQI are 2 respectively. The NodeB calculates difference between the CQI corresponding to B2 and the CQI reported by the user, and uses the sum of the difference, a pilot frequency and an MPO as the power of the HS-DSCH code channels used for scheduling the user data; and the NodeB uses the calculated power of the HS-DSCH code channel, the number of code channels C2 and the modulation mode QPSK as the scheduling parameters of user 1, and schedules the data of user 1 by using the scheduling parameters. During scheduling the data, the NodeB updates available code channel resources of the HS-DSCH code channels in a cell and the power resources of HSDPA and HSPA+ services.

The embodiment of the present invention can schedule HS-SCCH-Less user data and meet the requirements on the development of an HS-SCCH-Less service by allocating one or two HS-DSCH code channel(s) to an HS-SCCH-Less user during scheduling user data, obtaining scheduling parameters according to the number of allocated HS-DSCH code channels, a CQI reported by the HS-SCCH-Less user and a capability level of the HS-SCCH-Less user, and scheduling HS-SCCH-Less user data according to the scheduling parameters.

Based on the inventive concept same as that of the first embodiment, the second embodiment of the present invention provides a device for scheduling user data, and Fig. 2 is a structural block diagram illustrating a device for scheduling user data provided by this embodiment, in which the device comprises:
a judging module for judging whether a first priority queue comprises an HS-SCCH-Less user during scheduling user data;
an allocating module for allocating HS-DSCH code channels to the HS-SCCH-Less user when the judgment result of the judging module is yes;
wherein the number of the allocated HS-DSCH code channels can be one or two;
an obtaining module for obtaining scheduling parameters according to the number of the allocated HS-DSCH code channels, a CQI reported by the HS-SCCH-Less user, and a capability level of the HS-SCCH-Less user; and
a scheduling module for scheduling HS-SCCH-Less user data according to the scheduling parameters.

Furthermore, the obtaining module comprises:
a first obtaining unit for obtaining a capability level table of the HS-SCCH-Less user according to the capability level of the HS-SCCH-Less user; specifically, the first obtaining unit is used for obtaining a capability level table of the HS-SCCH-Less user according to the capability level of the HS-SCCH-Less user and the association relationship between the capability level of the HS-SCCH-Less user and the capability level table of the HS-SCCH-Less user, and
the details of the capability level table of the HS-SCCH-Less user can be found in the corresponding section of the method embodiment, thereby needing no further description;
a first determining unit for determining a Transmission Block size (TBsize) from the capability level table according to the number of the allocated HS-DSCH code channels and the CQI reported by the HS-SCCH-Less user, and recording a CQI corresponding to the determined TBsize, the number of the code channels and a modulation mode QPSK;
a second determining unit for determining power of the allocated HS-DSCH code channels according to the CQI corresponding to the determined TBsize and the CQI reported by the HS-SCCH-Less user; and
a second obtaining unit for using the determined power of the allocated HS-DSCH code channels, the number of the code channels and the modulation mode QPSK as the scheduling parameters.

Furthermore, the step that the second determining unit determines the power of the allocated HS-DSCH code channels according to the CQI corresponding to the determined TBsize and the CQI reported by the HS-SCCH-Less user comprises: the second determining unit uses the sum of the difference obtained by the CQI corresponding to the determined TBsize minus the CQI reported by the HS-SCCH-Less user, a pilot frequency and an MPO as the power of the allocated HS-DSCH code channels.

Furthermore, the judging module is further used for judging whether a second priority queue comprises an HS-SCCH-Less user during retransmitting user data; and
the scheduling module is further used for retransmitting HS-SCCH-Less user data when the judging module judges that the second priority queue comprises the HS-SCCH-Less user.

Furthermore, the judging module is further used for judging whether the HS-DSCH code channels allocated to the HS-SCCH-Less user by the allocating module are available, if the HS-DSCH code channels are available, then obtaining the scheduling parameters, otherwise, quitting this scheduling.

The number of the HS-DSCH code channels allocated to the HS-SCCH-Less user by the allocating module is one or two.

It should be noted that, the device for scheduling user data can be integrated in a NodeB.

In the embodiment of the present invention, the HS-SCCH-Less user data can be scheduled and the requirements on the development of an HS-SCCH-Less service are met by allocating HS-DSCH code channels to an HS-SCCH-Less user during scheduling user data, obtaining scheduling parameters according to the number of allocated HS-DSCH code channels, a CQI reported by the HS-SCCH-Less user and the capability level of the HS-SCCH-Less user, and scheduling HS-SCCH-Less user data according to the scheduling parameters.

## Claims

1. A method for scheduling user data, **characterized by** comprising:
during the scheduling of user data, judging, by a base station, that a first queue of users arranged according to priorities of the users comprises an High Speed Shared Control Channel, HS-SCCH, Less user, and allocating (S101), by the base station, High Speed Downlink Shared Channel, HS-DSCH, code channels to the HS-SCCH Less user;
obtaining (S102), by the base station, scheduling parameters according to the number of the allocated HS-DSCH code channels, a Channel Quality Indicator, CQI, reported by the HS-SCCH Less user, and a capability level of the HS-SCCH-Less user; wherein the capability level of the HS-SCCH Less user comprises the HS-SCCH Less user category; and
scheduling (S103), by the base station, data of the HS-SCCH Less user according to the scheduling parameters.

2. The method for scheduling user data according to claim 1, wherein the step of obtaining, by the base station, scheduling parameters according to the number of the allocated HS-DSCH code channels, the CQI reported by the HS-SCCH Less user, and the capability level of the HS-SCCH-Less user is:
obtaining, the base station, a capability level table of the HS-SCCH Less user according to the capability level of the HS-SCCH Less user;
determining, by the base station, the Transmission Block size, TBsize, from the capability level table according to the number of the allocated HS-DSCH code channels, and the CQI reported by the HS-SCCH Less user, and recording, by the base station, the CQI corresponding to the determined TBsize, the number of the code channels and a modulation mode;
determining, by the base station, the power of the allocated HS-DSCH code channels according to the CQI corresponding to the determined TBsize and the CQI reported by the HS-SCCH Less user; and
using, by the base station, the determined power of the allocated HS-DSCH code channels, the number of the code channels and the modulation mode as the scheduling parameters.

3. The method for scheduling user data according to claim 2, wherein the step of determining, by the base station, the power of the allocated HS-DSCH code channels according to the CQI corresponding to the determined TBsize and the CQI reported by the HS-SCCH Less user is: using, by the base station, the sum of the difference obtained by the CQI corresponding to the determined TBsize minus the CQI reported by the HS-SCCH Less user, the pilot frequency and Measure Power Offset, MPO, as the power of the allocated HS-DSCH code channels.

4. The method for scheduling user data according to any one of claims 1 to 3, further comprising: when user data are retransmitted, judging, by the base station, that a second queue of users arranged according to priorities of the users comprises the HS-SCCH Less user and retransmitting, by the base station, the data of the HS-SCCH Less user.

5. The method for scheduling user data according to any one of claims 1 to 3, after allocating, by the base station, the HS-DSCH code channel to the HS-SCCH-Less user, further comprising: judging, by the base station, whether the allocated HS-DSCH code channels are available, and if so, the scheduling parameters are obtained, or this scheduling quits.

6. The method for scheduling user data according to any one of claims 1 to 3, wherein the number of the HS-DSCH code channels is one or two.

7. A device for scheduling user data, for use in a base station, **characterized in that** the device comprises: a judging module, an allocating module, an obtaining module and a scheduling module; wherein,
the judging module is used for, during the scheduling of user data, judging whether a first queue of users arranged according to priorities of the users comprises an High Speed Shared Control Channel, HS-SCCH, Less user;
the allocating module is used for allocating High Speed Downlink Shared Channel, HS-DSCH, code channels to the HS-SCCH Less user when the judging module judges that the first queue of users arranged according to priorities of the users comprises the HS-SCCH Less user;
the obtaining module is used for obtaining scheduling parameters according to the number of the allocated HS-DSCH code channels, a CQI reported by the HS-SCCH Less user, and a capability level of the HS-SCCH Less user; wherein the capability level of the HS-SCCH Less user comprises the HS-SCCH Less user category; and
the scheduling module is used for scheduling the HS-SCCH Less user data according to the scheduling parameters obtained by the obtaining module.

8. The device for scheduling user data according to claim 7, wherein the obtaining module comprises: a first obtaining unit, a first determining unit, a second determining unit and a second obtaining unit; wherein,
the first obtaining unit is used for obtaining a capability level table of the HS-SCCH Less user according to the capability level of the HS-SCCH Less user;
the first determining unit is used for determining the TBsize from the capability level table according to the number of the allocated HS-DSCH code channels and the CQI reported by the HS-SCCH Less user, and recording the CQI corresponding to the determined TBsize, the number of the code channels and the modulation mode;
the second determining unit is used for determining the power of the allocated HS-DSCH code channels according to the CQI corresponding to the determined TBsize and the CQI reported by the HS-SCCH Less user; and
the second obtaining unit is used for using the determined power of the allocated HS-DSCH code channels, the number of the code channels and the modulation mode as the scheduling parameters.

9. The device for scheduling user data according to claim 8, wherein,
the second determining unit is used for determining the power of the allocated HS-DSCH code channels according to the CQI corresponding to the determined TBsize and the CQI reported by the HS-SCCH Less user by using the sum of the difference obtained by the CQI corresponding to the determined TBsize minus the CQI reported by the HS-SCCH Less user, the pilot frequency and MPO as the power of the allocated HS-DSCH code channels.

10. The device for scheduling user data according to any one of claims 7 to 9, wherein,
the judging module is further used for, when user data is retransmitted, judging whether a second queue of users arranged according to priorities of the users comprises the HS-SCCH Less user; and
the scheduling module is further used for retransmitting the HS-SCCH Less user data when the judging module judges that the second queue of users arranged according to priorities of the users comprises the HS-SCCH Less user.

11. The device for scheduling user data according to any one of claims 7 to 9, wherein,
the judging module is further used for judging whether the HS-DSCH code channels allocated to the HS-SCCH Less user by the allocating module are available, and if so, obtaining the scheduling parameters, or quitting this scheduling.

12. The device for scheduling user data according to any one of claims 7 to 9, wherein the number of the HS-DSCH code channels allocated to the HS-SCCH Less user by the allocating module is one or two.

## Patentansprüche

1. Verfahren zum Planen von Benutzerdaten, **dadurch gekennzeichnet, dass** es umfasst: Beurteilen durch eine Basisstation während des Planens von Benutzerdaten, dass eine erste Warteschlange von Benutzern, die gemäß Prioritäten der Benutzer organisiert wird, einen High-Speed-Shared-Control-Channel, HS-SCCH, -Less-Benutzer umfasst, und Zuweisen (S101) von High-Speed-Downlink-Shared-Channel, HS-DSCH, -Codekanälen an die HS-SCCH-Less-Benutzer durch die Basisstation;
Beziehen (S102) von Planungsparametern durch die Basisstation gemäß der Anzahl der zugewiesenen HS-DSCH-Codekanäle, eines von dem HS-SCCH-Less-Benutzer gemeldeten Channel-Quality-Indicator (Kanalqualitätsindikator), CQI, und einer Fähigkeitsstufe des HS-SCCH-Less-Benutzers; wobei die Fähigkeitsstufe des HS-SCCH-Less-Benutzers die Kategorie des HS-SCCH-Less-Benutzers umfasst; und
Planen (S103) von Daten des HS-SCCH-Less-Benutzers gemäß den Planungsparametern durch die Basisstation.

2. Verfahren zum Planen von Benutzerdaten nach Anspruch 1, wobei der Schritt des Beziehens von Planungsparametern durch die Basisstation gemäß der Anzahl der zugewiesenen HS-DSCH-Codekanäle, des durch den HS-SCCH-Less-Benutzer gemeldeten CQI und der Fähigkeitsstufe des HS-SCCH-Less-Benutzers sich bildet aus:
Beziehen einer Fähigkeitsstufentabelle des HS-SCCH-Less-Benutzers durch die Basisstation gemäß der Fähigkeitsstufe des HS-SCCH-Less-Benutzers;
Ermitteln der Übertragungsblockgröße, TBS, aus der Fähigkeitsstufentabelle gemäß der Anzahl der zugewiesenen HS-DSCH-Codekanäle und des durch den HS-SCCH-Less-Benutzer gemeldeten CQI durch die Basisstation, und Aufzeichnen des der ermittelten TBS entsprechenden CQI, der Anzahl der Codekanäle und eines Modulationsmodus durch die Basisstation;
Ermitteln der Leistung der zugewiesenen HS-DSCH-Codekanäle gemäß dem der ermittelten TBS entsprechenden CQI und dem durch den HS-SCCH-Less-Benutzer gemeldeten CQI durch die Basisstation; und
Verwenden der ermittelten Leistung der zugewiesenen HS-DSCH-Codekanäle, der Anzahl der Codekanäle und des Modulationsmodus als die Planungsparameter durch die Basisstation.

3. Verfahren zum Planen von Benutzerdaten nach Anspruch 2, wobei der Schritt des Ermitteins der Leistung der zugewiesenen HS-DSCH-Codekanäle gemäß dem der ermittelten TBS entsprechenden CQI und dem durch den HS-SCCH-Less-Benutzer gemeldeten CQI durch die Basisstation sich bildet aus: Verwenden der durch den der ermittelten TBS entsprechenden CQI minus dem durch den HS-SCCH-Less-Benutzer gemeldeten CQI erhaltenen Summe der Differenz, der Steuerfrequenz und Measure Power Offset, MPO, durch die Basisstation als die Leistung der zugewiesenen HS-DSCH Codekanäle.

4. Verfahren zum Planen von Benutzerdaten nach einem der Ansprüche 1 bis 3, das des Weiteren umfasst: Beurteilen durch die Basisstation, dass eine zweite, gemäß Prioritäten der Benutzer organisierte Warteschlange von Benutzern den HS-SCCH-Less-Benutzer umfasst, wenn Benutzerdaten erneut übertragen werden, und erneutes Übertragen der Daten des HS-SCCH-Less-Benutzers durch die Basisstation.

5. Verfahren zum Planen von Benutzerdaten nach einem der Ansprüche 1 bis 3, nach dem Zuweisen des HS-DSCH-Codekanals an den HS-SCCH-Less-Benutzer durch die Basisstation, das des Weiteren umfasst: Beurteilen durch die Basisstation, ob die zugewiesenen HS-DSCH-Codekanäle verfügbar sind, und falls dies zutrifft, werden die Planungsparameter bezogen oder dieses Planen wird beendet.

6. Verfahren zum Planen von Benutzerdaten nach einem der Ansprüche 1 bis 3, wobei die Anzahl der HS-DSCH-Codekanäle eins oder zwei beträgt.

7. Gerät zum Planen von Benutzerdaten zur Verwendung in einer Basisstation, **dadurch gekennzeichnet, dass** das Gerät umfasst: einen Beurteilungsmodul, einen Zuweisungsmodul, einen Bezugsmodul und einen Planungsmodul; wobei
das Beurteilungsmodul beim Planen von Benutzerdaten zum Beurteilen verwendet wird, ob eine gemäß Prioritäten der Benutzer organisierte erste Warteschlange von Benutzern einen High-Speed-Shared-Control-Channel, HS-SCCH, -Less-Benutzer umfasst;
das Zuweisungsmodul zum Zuweisen von High-Speed-Downlink-Shared-Channel, HS-DSCH, -Codekanälen für die HS-SCCH-Less-Benutzer verwendet wird, wenn das Beurteilungsmodul beurteilt, dass die erste Warteschlange von Benutzern, die gemäß Prioritäten der Benutzer organisiert wird, den HS-SCCH-Less-Benutzer umfasst;
das Bezugsmodul zum Beziehen von Planungsparametern gemäß der Anzahl der zugewiesenen HS-DSCH-Codekanäle, einem durch den HS-SCCH-Less-Benutzer gemeldeten CQI und einer Fähigkeitsstufe des HS-SCCH-Less-Benutzers verwendet wird; wobei die Fähigkeitsstufe des HS-SCCH-Less-Benutzers die Kategorie des HS-SCCH-Less-Benutzers umfasst; und
das Planungsmodul zum Planen der HS-SCCH-Less-Benutzerdaten gemäß den durch das Bezugsmodul erhaltenen Planungsparametern verwendet wird.

8. Gerät zum Planen von Benutzerdaten nach Anspruch 7, wobei das Bezugsmodul umfasst: eine erste Bezugseinheit, eine erste Ermittlungseinheit, eine zweite Ermittlungseinheit und eine zweite Bezugseinheit; wobei
die erste Bezugseinheit zum Beziehen einer Fähigkeitsstufentabelle des HS-SCCH-Less-Benutzers gemäß der Fähigkeitsstufe des HS-SCCH-Less-Benutzers verwendet wird;
die erste Ermittlungseinheit zum Ermitteln der TBS aus der Fähigkeitsstufentabelle gemäß der Anzahl der zugewiesenen HS-DSCH-Codekanäle und dem durch den HS-SCCH-Less-Benutzer gemeldeten CQI, und Aufzeichnen des CQI entsprechend der ermittelten TBS, der Anzahl der Codekanäle und des Modulationsmoduls verwendet wird;
die zweite Ermittlungseinheit zum Ermitteln der Leistung der zugewiesenen HS-DSCH-Codekanäle gemäß dem der ermittelten TBS entsprechenden CQI und des durch den HS-SCCH-Less-Benutzer gemeldeten CQI verwendet wird; und
die zweite Bezugseinheit zum Verwenden der ermittelten Leistung der zugewiesenen HS-DSCH-Codekanäle, der Anzahl der Codekanäle und des Modulationsmoduls als die Planungsparameter verwendet wird.

9. Gerät zum Planen von Benutzerdaten nach Anspruch 8, wobei die zweite Ermittlungseinheit zum Ermitteln der Leistung der zugewiesenen HS-DSCH-Codekanäle gemäß dem der ermittelten TBS entsprechenden CQI und dem durch den HS-SCCH-Less-Benutzer gemeldeten CQI durch Verwenden der Summe der Differenz verwendet wird,
bezogen durch den der ermittelten TBS entsprechenden CQI minus den durch den HS-SCCH-Less-Benutzer gemeldeten CQI, die Steuerfrequenz und MPO als die Leistung der zugewiesenen HS-DSCH-Codekanäle.

10. Gerät zum Planen von Benutzerdaten nach einem der Ansprüche 7 bis 9, wobei
das Beurteilungsmodul des Weiteren zum Beurteilen verwendet wird, ob eine zweite Warteschlange von gemäß Prioritäten der Benutzer organisierten Benutzern den HS-SCCH-Less-Benutzer umfasst, wenn Benutzerdaten erneut übertragen werden; und
das Planungsmodul des Weiteren zum erneuten Übertragen der HS-SCCH-Less-Benutzerdaten verwendet wird, wenn das Beurteilungsmodul beurteilt, dass die zweite Warteschlange von gemäß Prioritäten der Benutzer organisierten Benutzern den HS-SCCH-Less-Benutzer umfasst.

11. Gerät zum Planen von Benutzerdaten nach einem der Ansprüche 7 bis 9, wobei
das Beurteilungsmodul des Weiteren zum Beurteilen verwendet wird, ob die den HS-SCCH-Less-Benutzern zugewiesenen HS-DSCH-Codekanäle durch das Zuweisungsmodul verfügbar sind, und falls dies zutrifft, Beziehen der Planungsparameter oder Beenden dieses Planens.

12. Gerät zum Planen von Benutzerdaten nach einem der Ansprüche 7 bis 9, wobei die Anzahl der dem HS-SCCH-Less-Benutzer durch das Zuweisungsmodul zugewiesenen HS-DSCH-Codekanäle eins oder zwei beträgt.

## Revendications

1. Méthode d'ordonnancement de données d'utilisateur, **caractérisée par** ce qu'elle comprend : au cours de l'ordonnancement des données d'utilisateur, l'estimation, par une station de base, qu'une première file d'attente d'utilisateurs, agencée en fonction de priorités des utilisateurs, comprend un utilisateur sans canal de commande partagé haute vitesse, HS-SCCH-Less, et l'attribution (S101), par la station de base, de canaux de code de canal partagé de liaison descendante haute vitesse, HS-DSCH à l'utilisateur sans canal de commande partagé haute vitesse, HS-SCCH -Less;
l'obtention (S102), par la station de base, de paramètres d'ordonnancement en fonction du nombre de canaux de code HS-DSCH attribués, d'un indicateur de qualité de canal, CQI, communiqué par l'utilisateur du HS-SCCH-Less, et d'un niveau de capacité de l'utilisateur du canal HS-SCCH-Less ; le niveau de capacité de l'utilisateur du canal HS-SCCH-Less comprenant la catégorie d'utilisateur HS-SCCH-Less ; et
l'ordonnancement (S103), par la station de base, de données de l'utilisateur du canal HS-SCCH-Less en fonction des paramètres d'ordonnancement.

2. Méthode pour l'ordonnancement de données d'utilisateur selon la revendication 1, l'étape d'obtention, par la station de base, de paramètres d'ordonnancement en fonction du nombre des canaux de code HS-DSCH attribués, du CQI communiqué par l'utilisateur du HS-SCCH-Less, et du niveau de capacité de l'utilisateur du HS-SCCH-Less étant la suivante :
obtention, par la station de base, d'un tableau de niveau de capacité de l'utilisateur du HS-SCCH-Less en fonction du niveau de capacité de l'utilisateur du HS-SCCH-Less ;
détermination, par la station de base, de la taille du bloc de transmission, TBsize, d'après le tableau de niveau de capacité en fonction du nombre de canaux de code HS-DSCH attribués, et du CQI communiqué par l'utilisateur du HS-SCCH-Less , et enregistrement, par la station de base, du CQI correspondant à la taille TBsize déterminée, du nombre de canaux de code, et d'un mode de modulation ;
détermination, par la station de base, de la puissance des canaux de code HS-DSCH attribués en fonction du CQI correspondant à la TBsize déterminée et au CQI communiqué par l'utilisateur du HS-SCCH-Less ; et
utilisation, par la station de base, de la puissance déterminée de l'utilisation attribuée, des canaux de code HS-DSCH, du nombre de canaux de code, et du mode de modulation, comme les paramètres d'ordonnancement.

3. Méthode pour l'ordonnancement de données d'utilisateur selon la revendication 2, l'étape de détermination, par la station de base, de la puissance des canaux de code HS-DSCH attribués selon le CQI correspondant à la TBsize déterminée et au CQI communiqué par l'utilisateur du HS-SCCH-Less étant : l'utilisation, par la station de base, de la somme de la différence obtenue par le CQI correspondant à la TBsize déterminée moins le CQI communiqué par l'utilisateur du HS-SCCH-Less, la fréquence pilote et le décalage de puissance de mesure, MPO, en tant que puissance des canaux de code HS-DSCH attribués.

4. Méthode pour l'ordonnancement de données d'utilisateur selon une quelconque des revendications 1 à 3, comprenant en outre : lorsque des données utilisateur sont retransmises, l'estimation, par la station de base, qu'une deuxième file d'attente d'utilisateurs, agencée en fonction de priorités des utilisateurs, comprend l'utilisateur HS-SCCH-Less, et la retransmission, par la station de base, des données de l'utilisateur du HS-SCCH-Less.

5. Méthode pour l'ordonnancement de données d'utilisateur selon une quelconque des revendications 1 à 3, après l'attribution, par la station de base, du canal de code HS-DSCH à l'utilisateur du HS-SCCH-Less, comprenant en outre : l'estimation, par la station de base, de la disponibilité éventuelle des canaux de code HS-DSCH attribués, et, le cas échéant, l'obtention éventuelle des paramètres d'ordonnancement, autrement cet ordonnancement s'arrête.

6. Méthode pour l'ordonnancement de données d'utilisateur selon une quelconque des revendications 1 à 3, le nombre de canaux de code HS-DSCH est un ou deux.

7. Dispositif pour l'ordonnancement de données utilisateur, pour l'utilisation dans une station de base, **caractérisé en ce que** le dispositif comprend :
un module d'estimation, un module d'attribution, un module d'obtention, et un module d'ordonnancement, dans lequel :
le module d'estimation est utilisé, au cours de l'ordonnancement des données utilisateur, pour estimer si une première file d'attente d'utilisateurs, agencée en fonction de priorités des utilisateurs, comprend un utilisateur de canal de commande partagé haute vitesse HS-SCCH-Less ;
le module d'attribution est utilisé pour attribuer des canaux de code de canal de commande partagé de liaison descendante haute vitesse, HS-DSCH, à l'utilisateur HS-SCCH-Less, lorsque le module d'estimation estime que la première file d'attente d'utilisateurs agencée en fonction de priorités des utilisateurs comprend l'utilisateur HS-SCCH-Less ;
le module d'obtention est utilisé pour obtenir des paramètres d'ordonnancement en fonction du nombre de canaux de code HS-DSCH attribué, d'un CQI communiqué par l'utilisateur HS-SCCH-Less, et d'un niveau de capacité de l'utilisateur HS-SCCH-Less ; le niveau de capacité de l'utilisateur HS-SCCH-Less comprenant la catégorie d'utilisateur HS-SCCH-Less ; et
le module d'ordonnancement étant utilisé pour l'ordonnancement des données de l'utilisateur HS-SCCH-Less en fonction des paramètres d'ordonnancement obtenus par le module d'obtention.

8. Dispositif pour l'ordonnancement de données utilisateur selon la revendication 7, le module d'obtention comprenant : une première unité d'obtention, une première unité de détermination, une deuxième unité de détermination, et une deuxième unité d'obtention ;
la première unité d'obtention étant utilisée pour obtenir un tableau de niveau de capacité de l'utilisateur du HS-SCCH-Less en fonction du niveau de capacité de l'utilisateur du HS-SCCH-Less ;
la première unité de détermination étant utilisée pour déterminer la TBsize d'après le tableau de niveau de capacité en fonction du nombre de canaux de code HS-DSCH attribués et du CQI communiqué par l'utilisateur HS-SCCH-Less, et enregistrer le CQI correspondant à la TBsize déterminée, au nombre de canaux de code, et au mode de modulation ;
la deuxième unité de détermination étant utilisée pour déterminer la puissance des canaux de code HS-DSCH attribués en fonction du CQI correspondant à la TBsize déterminée et au CQI communiqué par l'utilisateur HS-SCCH-Less ; et
la deuxième unité d'obtention étant utilisée pour utiliser la puissance déterminée des canaux de code HS-DSCH attribués, le nombre de canaux de code, et le mode de modulation comme les paramètres d'ordonnancement.

9. Dispositif pour l'ordonnancement de données utilisateur selon la revendication 8, la deuxième unité de détermination étant utilisée pour déterminer
la puissance des canaux de code HS-DSCH attribués en fonction du CQI correspondant à la TBsize déterminée et du CQI communiqué par l'utilisateur HS-SCCH-Less, en utilisant la somme de la différence obtenue par le CQI correspondant à la TBsize déterminée moins le CQI communiqué par l'utilisateur HS-SCCH-Less, la fréquence pilote et le MPO en tant que puissance des canaux de code HS-DSCH attribués.

10. Dispositif pour l'ordonnancement de données utilisateur selon une quelconque des revendications 7 à 9, dans lequel
le module d'estimation est utilisé en outre, lors de la retransmission de données de l'utilisateur, pour estimer si une deuxième file d'attente d'utilisateurs, agencée conformément à des priorités des utilisateurs, comprend l'utilisateur HS-SCCH-Less ; et
le module d'estimation est utilisé en outre pour retransmettre les données de l'utilisateur HS-SCCH-Less lorsque le module d'estimation estime que la deuxième file d'attente d'utilisateurs, agencée conformément à des priorités des utilisateurs, comprend l'utilisateur HS-SCCH-Less.

11. Dispositif pour l'ordonnancement de données utilisateur selon une quelconque des revendications 7 à 9, dans lequel
le module d'estimation est utilisé en outre pour estimer si les canaux de code HS-DSCH attribués à l'utilisateur HS-SCCH-Less par le module d'attribution sont disponibles, et, le cas échéant, pour obtenir les paramètres d'ordonnancement, ou arrêter cet ordonnancement.

12. Dispositif pour l'ordonnancement de données utilisateur selon une quelconque des revendications 7 à 9, dans lequel le nombre de canaux de code HS-DSCH attribués à l'utilisateur HS-SCCH-Less par le module d'attribution est un ou deux.
